(19) Europäisches Patentamt
European Patent Office
Office européen des brevets

(11) **EP 0 708 211 B1**

(12) **EUROPÄISCHE PATENTSCHRIFT**

(45) Veröffentlichungstag und Bekanntmachung des Hinweises auf die Patenterteilung:
**26.01.2000  Patentblatt 2000/04**

(51) Int Cl.$^7$: **E04C 2/54**

(21) Anmeldenummer: **95115383.2**

(22) Anmeldetag: **29.09.1995**

(54) **Stegmehrfachplatte**

Multilayer cross-braced layer

Plaque multicouche entretoisée

(84) Benannte Vertragsstaaten:
**AT BE CH DE DK ES FR GB GR IE IT LI LU NL PT SE**

(30) Priorität: **19.10.1994  DE 4437362**

(43) Veröffentlichungstag der Anmeldung:
**24.04.1996  Patentblatt 1996/17**

(73) Patentinhaber: **Röhm Gesellschaft mit beschränkter Haftung**
**64293 Darmstadt (DE)**

(72) Erfinder: **Zeller, Jürgen**
**D-63517 Rodenbach (DE)**

(74) Vertreter: **Herrmann, Reinhard**
**Degussa-Hüls Aktiengesellschaft**
**Patente - Marken**
**Standort Wolfgang**
**Rodenbacher Chaussee 4**
**Postfach 13 45**
**63403 Hanau-Wolfgang (DE)**

(56) Entgegenhaltungen:
**EP-A- 0 111 806**       **EP-A- 0 150 534**
**FR-A- 1 543 036**       **US-A- 3 085 473**

**Beschreibung**

Gegenstand der Erfindung ist eine Stegmehrfachplatte aus transparentem thermoplastischen Kunststoff mit langgestreckten, parallel liegenden Hohlkammern von rechteckförmigem Querschnitt, welche seitlich durch Stege voneinander getrennt und auf der Ober- und Unterseite durch jeweils einen Obergurt und einen Untergurt begrenzt sind und die gegebenenfalls noch einen oder mehrere Innengurte aufweisen, wobei die Gurte der Hohlkammern zusammenhängende Kunststoffplatten bilden.

Die Stegmehrfachplatten bestehen somit aus zwei, drei oder mehr in vorgegebenen Abständen parallel angeordneten Kunststoffplatten, die durch dazwischen angeordnete, parallel zueinander verlaufende Stege verbunden sind, wobei die Ebenen der Stege zu den Plattenebenen senkrecht stehen. Die Stege sind normalerweise in regelmäßigen Abständen angeordnet.

Zur Herstellung der Stegmehrfachplatten werden thermoplastische, transparente Kunststoffe eingesetzt, insbesondere Polymethylmethacrylate (Acrylglas) und Polycarbonat. Die Stegmehrfachplatten eignen sich für Verglasungen im gewerblichen Bereich, z. B. für Gewächshäuser, Sheddächer, Industrie- und Sporthallen und im privaten Bereich für Pergolen-, Terassenüberdachungen und Wintergärten.

Für die Verwendung dieser Stegmehrfachplatten in Gewächshäusern und Wintergärten wird eine möglichst hohe Transmission für das einfallende Sonnenlicht bei gleichzeitig geringem Wärmedurchgangskoeffizienten k angestrebt. Der Wärmedurchgangskoeffizient k ist ein Maß für die Raumstrahlungsverluste z. B. des Gewächshauses durch die Verglasung hindurch.

Die Lichtdurchlässigkeit (nach DIN 5036) beträgt bei Stegdoppelplatten aus Acrylglas etwa 86 % und bei Stegdreifachplatten 81 %. Die Wärmedurchgangskoeffizienten liegen bei 2,8 bzw. 2,4 W/m$^2$K.

Das durch die Stegmehrfachplatten hindurchtretende Sonnenlicht wird im Gewächshaus absorbiert und in Wärmeenergie umgewandelt. Aufgrund der obigen Zahlenwerte ist bei Sonnenschein die Energiezufuhr durch die Sonneneinstrahlung durch die Stegmehrfachplatten größer als die Energieverluste infolge des Wärmedurchgangskoeffizienten. Diese Verhältnisse werden als Treibhauseffekt bezeichnet.

Die im Rahmen dieser Erfindung verwendeten Ortsbestimmungen "außen", "innen", "oben" und "unten" beziehen sich jeweils auf die Richtung des einfallenden Sonnenlichtes, welches von außen bzw. von oben auf die Stegmehrfachplatten trifft.

Aufgabe der vorliegenden Erfindung ist es, die wärmedämmenden Eigenschaften der Stegmehrfachplatten unter weitgehender Beibehaltung der Lichttransmission zu verbessern.

Diese Aufgabe wird durch eine gattungsgemäße Stegmehrfachplatte gelöst. Die Stegmehrfachplatte ist dadurch gekennzeichnet, daß der Obergurt oder einer der Innengurte der Hohlkammern in Form einer sich längs der Hohlkammern erstreckenden zylindrischen, das Licht sammelnden, Fresnellinse mit einer Brennweite **f** ausgebildet ist, wobei die Brennweite **f** das ein- bis zehnfache des Abstandes **d** zwischen dem betreffenden Gurt und dem Untergurt beträgt und die Untergurte jeweils im Bereich der Stege mit parallelen, insbesondere infrarotes Licht, reflektierenden Streifen unter Aussparung eines Streifens der Breite **b** versehen sind, wobei für die Breite b des nicht reflektierenden Streifens die Beziehung gibt.

$$a\left(1-\frac{d}{f}\right) < b < a.$$

Die erfindungsgemäße Stegmehrfachplatte weist somit auf der Kunststoffplatte an ihrer Oberseite oder auf einer der innenliegenden Kunststoffplatten parallel liegende zylindrische Fresnellinsen auf, die durch die parallel liegenden Stege voneinander getrennt sind. Diese Fresnellinsen bündeln das einfallende Sonnenlicht in parallel liegenden Brennlinien, die abhängig von der gewählten Brennweite der Fresnellinsen unterhalb des Untergurtes liegen.

Durch die Bündelung des einfallenden Sonnenlichtes wird es möglich, auf der Unterseite der Stegmehrfachplatte jeweils im Bereich der Stege parallel liegende, insbesondere das infrarote Licht reflektierende Streifen anzubringen, ohne daß die Lichttransmission und damit auch die Energietransmission der Stegmehrfachplatten in Richtung von der Oberseite zur Unterseite geschwächt wird. Dagegen wird das aus dem Raum hinter der Stegmehrfachplatte diffus reflektierte und auf die Unterseite der Stegmehrfachplatte einfallende Licht und die Wärmestrahlung nur im Verhältnis der Breite der nicht reflektierend belegten Streifen der Stegmehrfachplatte zur Gesamtbreite hindurchgelassen. Die Wärmedurchgangszahl der Stegmehrfachplatte wird in dieser Richtung also entsprechend vermindert.

Die erfindungsgemäße Stegmehrfachplatte weist somit einen verbesserten Treibhauseffekt auf. Die Breite **b** des nicht reflektierenden Streifens muß die Beziehung

$$a\left(1-\frac{d}{f}\right) < b < a.$$

erfüllen, wobei **a** den Abstand der Stege voneinander bezeichnet, **f** die Brennweite der Fresnellinsen und **d** der Abstand der Fresnellinsen von der Unterseite der Stegmehrfachplatte ist.

Werden die Fesnellinsen an den Obergurten der Stegmehrfachplatte angebracht, so ist es zweckmäßig, sie so anzuordnen, daß ihre Struktur auf der den Hohlkammern zugewandten Seiten der Obergurte angeordnet ist.

Für die Zwecke der Erfindung ist es in vielen Fällen ausreichend, wenn die mathematische Form der Fresnellinsen durch einfache Prismen angenähert wird. Die Bündelung des einfallenden Sonnenlichtes erfolgt dann zwar nicht in einer eng begrenzten Brennlinie, sondern es wird nur um die Brennlinie herum konzentriert. Dies erlaubt jedoch immer noch das Anbringen der reflektierenden Streifen unterhalb der Stege ohne wesentliche Verminderung der Lichttransmission.

Die beschriebene Funktion der erfindungsgemäßen Stegmehrfachplatten ist in idealer Weise nur bei senkrechtem Einfall des Sonnenlichtes auf die Platte erfüllt. Bei schrägem Lichteinfall kommt es mit zunehmendem Einfallswinkel zu einer abnehmenden Lichttransmission infolge von Begrenzungen der Strahlenbündel durch die reflektierenden Streifen. Die Verminderung der Lichttransmission infolge der täglichen Sonnenbahn kann dadurch minimiert werden, daß die erfindungsgemäßen Stegmehrfachplatten mit horizontaler Orientierung der Hohlkammern eingebaut werden.

Zur Herstellung der Stegmehrfachplatten sind alle thermoplastischen und transparenten Kunststoffe geeignet, insbesondere Polyolefine wie Polyethylen und Polypropylen, Vinylhalogenidpolymerisate wie Polyvinylchlorid, Polyamide wie Polyamid 6 und Polyamid 6,6, Polyurethane, aromatische Polyester wie Polyalkylen- und Polybutylenterephthalat; Polyacrylate- und -methacrylate wie Polymethylmetacrylat, ABS-Kunststoffe, aromatische Polycarbonate wie Bisphenol-A-Polycarbonat, Polyvinylaromaten wie Polystyrol. Die Stegmehrfachplatten können mit den üblichen Extrusionsverfahren hergestellt werden.

Die das infrarote Licht reflektierenden Streifen auf der Unterseite der Stegmehrfachplatte können auf verschiedene Art und Weise aufgebracht werden. Zweckmäßigerweise wird ein reflektierendes Metall wie z. B. Aluminium verwendet, welches durch Vakuumbeschichtungstechniken wie z. B. thermische Bedampfung oder Kathodenzerstäubung aufgebracht werden kann.

Im einfachsten Fall kann eine mit Aluminium beschichtete Klebefolie auf die Stegmehrfachplatten aufgeklebt werden. Dies ist deshalb möglich, weil es nur erforderlich ist, daß die reflektierenden Streifen das Licht bzw. die Wärmestrahlung aus dem Raum hinter der Stegmehrfachplatte wieder zurück reflektieren. Es ist nicht notwendig, daß die reflektierenden Streifen auch von der Lichteinfallsseite her einen hohen Reflektionsgrad besitzen.

Es zeigen

Figur 1: Querschnitt durch eine Stegdoppelplatte mit Ausbildung der Obergurte als zylindrische Fresnellinsen

Figur 2: Querschnitt durch eine Stegdreifachplatte mit Ausbildung der Mittelgurte als zylindrische Fresnellinsen.

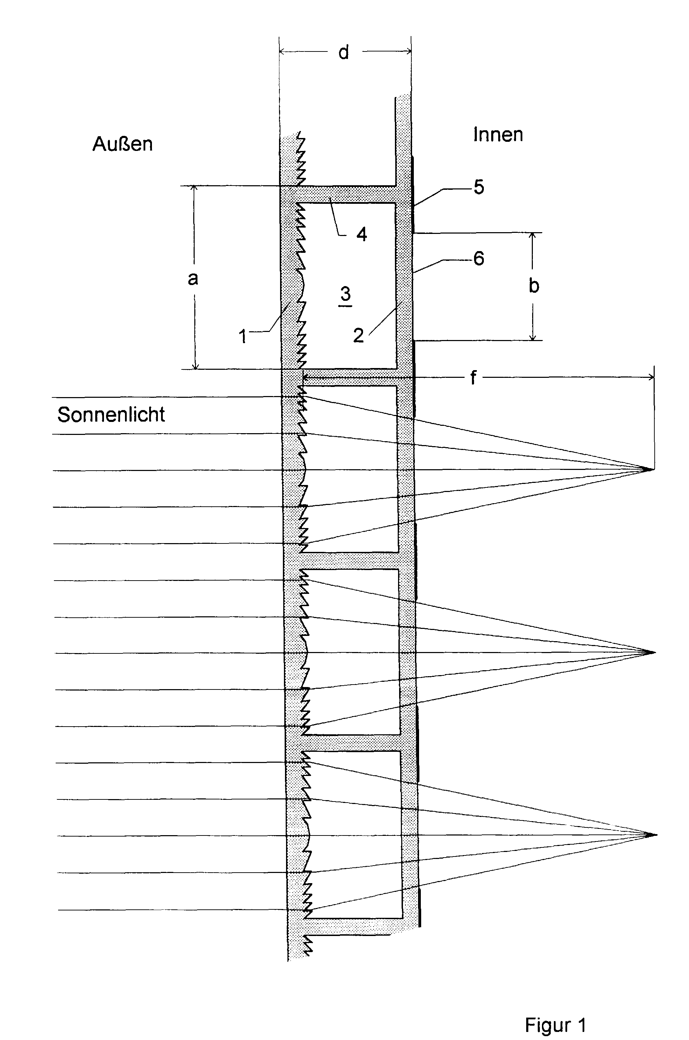

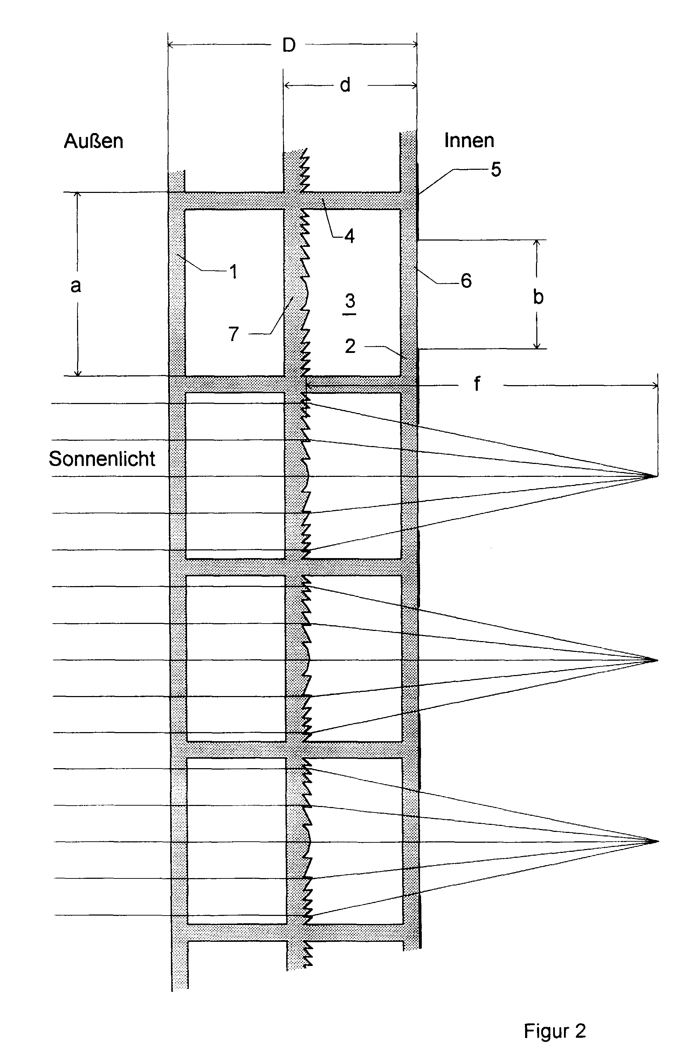

Figur 1 und Figur 2 zeigen die erfindungsgemäße Stegmehrfachplatte in der Ausführung als Stegdoppelplatte (Figur 1) und als Stegdreifachplatte (Figur 2).

Die Obergurte 1 der Stegdoppelplatte sind auf ihrer den Hohlkammern 3 zugewandten Innenflächen in Form von langgestreckten Fresnellinsen strukturiert. Die Fresnellinsen besitzen die Brennweite **f** und bündeln das einfallende Sonnenlicht unterhalb des Untergurtes 2 in parallel liegenden Brennlinien.

Die Hohlkammern 3 werden seitlich durch die Stege 4 begrenzt, die in regelmäßigen Abständen **a** voneinander angeordnet sind. Die Dicke **d** der Stegdoppelplatte ist identisch mit dem Abstand **d** der Fresnellinsen von den Untergurten.

Wegen der Lichtbündelung ist es möglich, auf der Unterseite der Untergurte im Bereich der Stege reflektierende Streifen 5 anzubringen, ohne die Lichttransmission der Platte wesentlich zu schwächen. Dazu wird die Breite der reflektierenden Streifen so gewählt, daß die Breite **b** des zwischen ihnen freibleibenden Bereiches 6 so groß ist, daß die Lichtbündel ohne Abschattung hindurchtreten können.

Figur 2 zeigt eine erfindungsgemäße Stegdreifachplatte. In diesem Fall sind die Innengurte 7 in Form von langgestreckten Zylinderlinsen strukturiert. **D** bezeichnet die Gesamtdicke der Stegdreifachplatte, während **d** den Abstand der Fresnellinsen von den Untergurten angibt.

## Patentansprüche

**1.** Stegmehrfachplatte aus transparentem Kunststoff mit langgestreckten, parallel liegenden Hohlkammern (3) von rechteckförmigem Querschnitt, welche seitlich durch Stege (4) voneinander getrennt und auf der Ober- und Unterseite durch jeweils einen Obergurt (1) und einen Untergurt (2) begrenzt sind und die gegebenenfalls noch einen oder mehrere Innengurte aufweisen, wobei die Stege (4) im Abstand **a** voneinander angeordnet sind und die Gurte der Hohlkammern (3) zusammenhängende Kunststoffplatten bilden,

**dadurch gekennzeichnet,**

daß der Obergurt (1) oder einer der Innengurte der Hohlkammern in Form einer sich längs der Hohlkammern (3) erstreckenden zylindrischen, das Licht sammelnden, Fresnellinse mit einer Brennweite **f** ausgebildet ist, wobei die Brennweite **f** das ein- bis zehnfache des Abstandes **d** zwischen dem betreffenden Gurt und dem Untergurt (2) beträgt und die Untergurte (2) jeweils im Bereich der Stege (4) mit parallelen, insbesondere infrarotes Licht, reflektierenden Streifen (5) unter Aussparung eines Streifens (6) der Breite **b** versehen sind, wobei für die Breite **b** des nicht reflektierenden Streifens (6) die Beziehung gilt

$$a\left(1-\frac{d}{f}\right) < b < a.$$

**2.** Stegmehrfachplatte nach Anspruch 1,
**dadurch gekennzeichnet,**
daß die Fresnellinsen derart auf den Obergurten (1) angebracht sind, daß ihre Struktur auf der den Hohlkammern (3) zugewandten Seiten der Obergurte (1) angeordnet ist.

**3.** Verwendung der Stegmehrfachplatten nach einem der vorstehenden Ansprüche zur Verglasung von Gewächshäusern.

**Claims**

**1.** Multilayer cross-braced layer of transparent plastic with elongated, parallel hollow chambers (3) of rectangular cross-section, which are separated from one another laterally by cross braces (4) and are bordered on the upper side and under-side by in each case an upper strap (1) and a lower strap (2) and which optionally also have one or more inner straps, the cross braces (4) being arranged at a distance **a** from one another and the straps of the hollow chambers (3) forming continuous layers of plastic,
**characterized in that**
the upper strap (1) or one of the inner straps of the hollow chambers is constructed in the form of a cylindrical, light-collecting Fresnel lens extending along the hollow chambers (3) and having a focal length **f**, wherein the focal length **f** is one to ten times the distance **d** between the strap in question and the lower strap (2) and the lower straps (2) are each provided, in the region of the cross braces (4), with parallel reflecting strips (5), in particular reflecting infrared light, with omission of a strip (6) of width **b**, where, for the width **b** of the non-reflecting strip (6), the following relationship applies

$$a\left(1-\frac{d}{f}\right) < b < a.$$

**2.** Multilayer cross-braced layer according to claim 1,
**characterized in that**

the Fresnel lenses are attached to the upper straps (1) such that their structure is arranged on the sides of the upper straps (1) facing the hollow chambers (3).

**3.** Use of the multilayer cross-braced layer according to one of the above claims for glazing greenhouses.

**Revendications**

**1.** Plaque multicouche entretoisée en matière plastique transparente, comportant des chambres creuses (3) allongées et parallèles, de section rectangulaire, séparées les unes des autres par des entretoises (4) et délimitées en haut et en bas par une ceinture supérieure (1) et une ceinture inférieure (2), la plaque comportant éventuellement en plus une ou plusieurs ceintures internes, les entretoises (4) étant espacées entre elles d'une distance (a) tandis que les ceintures des chambres creuses forment des plaques continues en matière plastique, caractérisée en ce que
la ceinture supérieure (1) ou l'une des ceintures internes des chambres creuses, a la forme d'une lentille de Fresnel s'étendant le long de la chambre creuse et de distance focale (f) ayant une valeur comprise entre une et dix fois la distance (d) séparant la ceinture en question de la ceinture inférieure (2) qui, près de chacune des entretoises (4), est munie de bandes parallèles (5) réfléchissant la lumière et en particulier les rayons infrarouges, et laissant entre elles des bandes non réfléchissantes (6) dont la largeur (b) satisfait la relation :

$$a\left(1-\frac{d}{f}\right) < b < a.$$

**2.** Plaque multicouche selon la revendication 1,
caractérisée en ce que
les lentilles de Fresnel sont réalisées sur la ceinture supérieure (1) de manière que leur structure se trouve sur la face de la ceinture située en regard des chambres creuses (3).

**3.** Utilisation des plaques multicouches entretoisées selon l'une des revendications précédentes, comme vitrages de serres.

Figur 1

Figur 2